# DEMANDE DE BREVET EUROPEEN

(11) **EP 0 854 334 A1**
(43) Date de publication de la demande: **22.07.1998**
(21) Numéro de dépôt: 98400026.5
(22) Date de dépôt: 08.01.1998
(51) Int. Cl.: F25D 3/12

(54) **Bac de réception de neige carbonique**

(30) Priorité: 20.01.1997 FR 9700531
(71) Demandeur: Carboxyque Française, 92088 La Défense (FR)
(72) Inventeur: Gibot, Claude, Tour Ariane, 92088 La Défense (FR)
(74) Mandataire: Vesin, Jacques

(57) **Abrégé**

L'invention concerne un bac (11) de réception de neige carbonique comprenant, d'une part, des moyens (21) d'injection adaptés pour coopérer avec un injecteur (31) relié à une source de CO₂ liquide et permettre l'injection de neige carbonique dans le bac (Il), et, d'autre part, dans la face supérieure du bac, des moyens (25) d'évacuation du CO₂ gazeux formé lors de ladite injection. Les moyens (21) d'injection sont adaptés pour orienter l'injection de neige carbonique à peu près tangentiellement à une paroi latérale du bac (11) de manière à créer un tourbillon dans le bac, et les moyens (21) d'évacuation du CO₂ gazeux produit lors de l'injection de neige carbonique sont localisés dans la région centrale dudit tourbillon.

Application à la conservation et au transport de produits alimentaires frais ou surgelés.

## Description

La présente invention concerne un bac de réception de neige carbonique du type comprenant, d'une part, des moyens d'injection adaptés pour coopérer avec un injecteur relié à une source de CO₂ liquide et permettre l'injection de neige carbonique dans le bac, et, d'autre part, dans la face supérieure du bac, des moyens d'évacuation du CO₂ gazeux formé lors de ladite injection.

Ces bacs sont utilisés dans des enceintes de conservation à basse température de produits pour constituer une source froide. La conservation à basse température des produits est assurée par sublimation de la neige carbonique contenue dans le bac et par transfert convectif dans l'enceinte du CO₂ gazeux résultant. De telles enceintes ainsi que le mode de circulation des gaz froids dans celles-ci sont décrits par exemple dans les demandes de brevet EP-A-337 860 et EP-A-591 047.

De tels bacs sont particulièrement destinés à la conservation et au transport de produits alimentaires frais.

Diverses solutions ont été proposées pour assurer le chargement en neige carbonique de tels bacs.

Ces bacs sont parfois extractibles et comportent une face supérieure ouverte pour recevoir le chargement de neige carbonique en provenance d'un conteneur de neige carbonique en vrac, ou directement d'une torche de projection de neige carbonique. Ce type de chargement est délicat, peu rationnel et engendre des pertes importantes en neige carbonique. De plus, il ne permet pas d'adapter la quantité de neige carbonique aux besoins précis que peut exiger la conservation de produits particuliers.

Un autre type de chargement, décrit dans la demande de brevet EP-A-631 096, permet d'injecter une quantité déterminée de CO₂ liquide sous pression de façon à former une masse déterminée de neige carbonique dans le bac.

Le bac décrit dans ce dernier document comprend, d'une part, une rampe d'injection comportant des orifices d'injection et de détente du CO₂ liquide, qui peut être raccordée à un injecteur de CO₂ liquide, et un déflecteur. D'autre part, il comprend dans sa surface supérieure une grille d'évacuation du CO₂ gazeux produit lors de la formation de la neige carbonique. Cette grille empêche la neige carbonique formée de s'échapper du bac et permet, après le chargement du bac, l'évacuation du CO₂ gazeux formé par sublimation de la neige carbonique. La rampe d'injection est disposée le long d'une face latérale du bac et permet un remplissage relativement uniforme de celui-ci. L'inconvénient principal d'un tel agencement est son coût élevé.

Un autre mode de réalisation décrit dans le même document comporte un boîtier d'injection qui peut s'adapter directement sur une face de chargement d'un bac. Le bac décrit présente également une grille d'évacuation du CO₂ gazeux et de retenue de la neige carbonique, montée dans la face supérieure du bac. Ce mode de réalisation présente l'inconvénient de nécessiter la réalisation d'autant de boîtiers d'injection qu'il existe de dimensions de bacs différentes.

Le but de la présente invention est de fournir un bac qui, d'une part, permette un chargement rapide, modulable, nécessitant un minimum de manipulations et réduisant les pertes en CO₂, et, d'autre part, soit simple à réaliser et donc de coût de production réduit.

A cet effet, l'invention a pour objet un bac du type précité, caractérisé en ce que les moyens d'injection sont adaptés pour orienter l'injection de neige carbonique à peu près tangentiellement à une paroi latérale du bac de manière à créer un tourbillon dans le bac, et en ce que les moyens d'évacuation du CO₂ gazeux produit lors de l'injection de neige carbonique sont localisés dans la région centrale dudit tourbillon.

Suivant des modes particuliers de réalisation, le bac peut comporter une ou plusieurs des caractéristiques suivantes :
- les moyens d'injection comprennent un orifice de réception d'une buse de détente de CO₂ liquide et de formation de neige carbonique solidaire de la tête de l'injecteur,
- les moyens d'injection comprennent des moyens de raccordement à l'injecteur, reliés à une buse de détente de CO₂ liquide et de génération de neige carbonique, cette buse étant solidaire du bac,
- des moyens de solidarisation temporaire sont prévus pour positionner l'injecteur sur le bac,
- les moyens de solidarisation temporaire comprennent un dispositif de verrouillage/déverrouillage manuel,
- les moyens de solidarisation comprennent un système à aimant,
- les moyens d'évacuation sont constitués par un orifice, notamment circulaire,
- le bac est parallélépipédique et les moyens d'injection sont adjacents et parallèles à une des grandes faces latérales du bac.

L'invention a également pour objet une enceinte de conservation à basse température de produits, du type comportant un volume de stockage thermiquement isolé et au moins un bac de neige carbonique adapté pour réfrigérer ce volume, caractérisé en ce que le bac est un bac tel que défini ci-dessus.

L'invention a finalement pour objet une installation de conservation à basse température de produits, du type comprenant une enceinte de conservation à basse température de produits comportant un volume de stockage et au moins un bac de réception de neige carbonique adapté pour réfrigérer ce volume, une source de CO₂ liquide sous pression, et un injecteur relié à cette source, adapté pour être relié au bac et muni d'une vanne de distribution reliée à des moyens de commande, caractérisée en ce que l'enceinte est une enceinte telle que définie ci-dessus.

Des exemples de réalisation de l'invention vont maintenant être décrits en regard des dessins annexés sur lesquels :
- la figure 1 est une vue schématique d'une installation de conservation de produits frais selon l'invention,
- la figure 2 est une vue en perspective du bac de réception de neige carbonique de l'installation de la figure 1,
- les figures 3 et 4 sont des vues en perspective éclatée illustrant le remplissage du bac de la figure 2,
- la figure 5 est une vue schématique en perspective, avec arrachement, illustrant un autre mode de réalisation d'un bac selon l'invention.

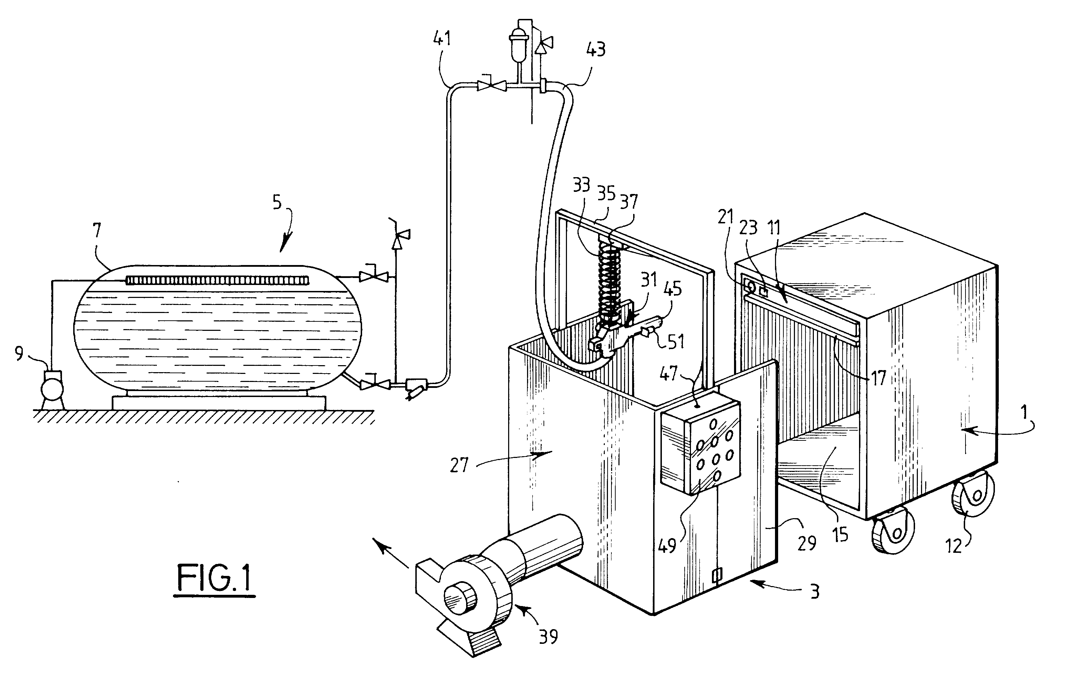

L'installation représentée à la figure 1 comprend une enceinte 1 de conservation à basse température de produits telle que décrite dans le document EP-A-337 860 susmentionné, un dispositif 3 de chargement en neige carbonique et une source 5 de CO₂ liquide.

Le CO₂ liquide est contenu dans un réservoir 7 dans des conditions déterminées de pression et de température, entretenues par un groupe frigorifique 9, typiquement entre 18 et 20 bars relatifs et à -20°C.

L'enceinte 1 est un conteneur isotherme de forme parallélépipédique mobile sur des roulettes 12. Elle comprend une porte d'accès avant non représentée, et un bac 11 de réception de la neige carbonique. Le bac 11, parallélépipédique et de forme plate, est constitué d'une cuvette 14 et d'un couvercle 16. Il est suspendu, au moyen de pattes de fixation 13 réparties régulièrement sur les faces latérales de la cuvette et, par exemple, d'un système de boulonnage, dans la partie supérieure de la chambre intérieure 15 de l'enceinte 1. La partie inférieure de cette chambre 15 forme un volume de stockage des produits thermiquement isolé.

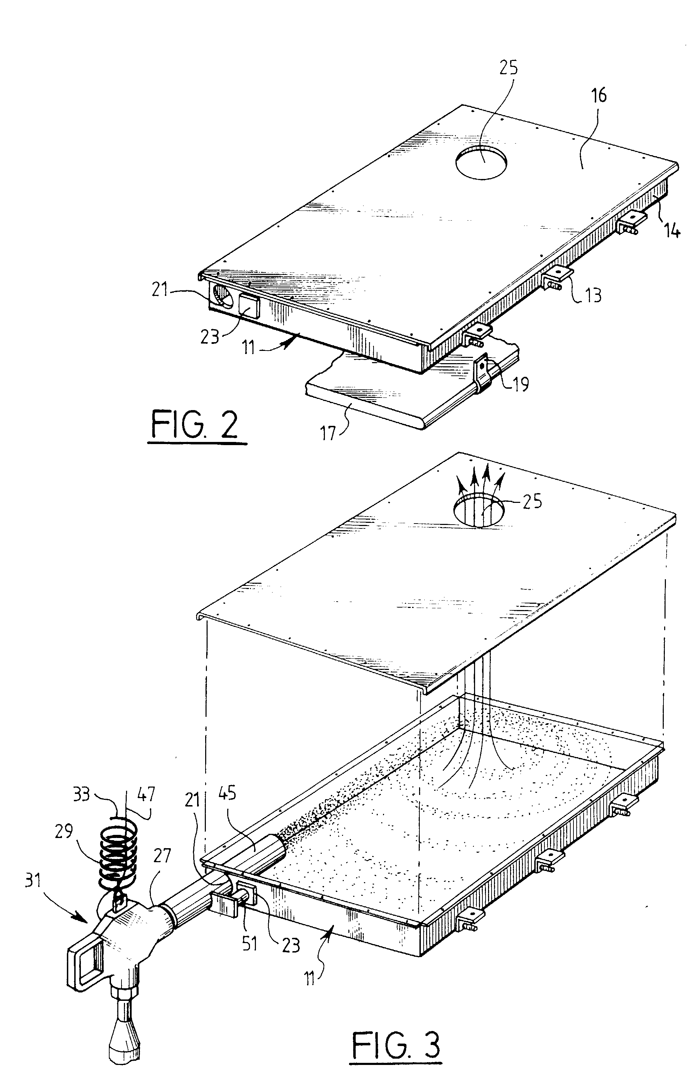

L'enceinte 1 comprend en outre un écran thermique 17 amovible, en forme de plaque horizontale, suspendu au bac 11 au moyen de pattes 19 (figure 2). Cet écran s'étend à distance de la face inférieure du bac 11 et sépare ce dernier du volume de stockage.

La face avant du bac 11 est munie d'un orifice 21 d'injection de neige carbonique, adapté pour recevoir la tête d'un injecteur de neige carbonique. Cet orifice est adjacent à la face latérale gauche du bac 11, qui est l'une des deux grandes faces latérales du bac. Une plaque magnétique 23 est également fixée, par collage ou autre, à proximité de l'orifice 17 pour permettre la solidarisation temporaire du bac et d'un injecteur de neige carbonique.

La face supérieure du bac 11 présente un orifice circulaire 25 d'évacuation du CO₂ gazeux formé lors de l'injection de neige carbonique. La position de cet orifice sera précisée plus loin. Cet orifice 25 sert également de moyen d'évacuation du CO2 gazeux formé lors de la sublimation de la neige carbonique.

Le dispositif de chargement 3 comprend un injecteur 31 de neige carbonique et une structure d'auvent articulée 23. Cette structure 27 est munie de deux battants latéraux 29 déployables. Elle est destinée à être positionnée en regard de la face avant de l'enceinte 1, qui est la face de chargement en neige carbonique. L'injecteur 31 est suspendu par un moyen 33 de suspension élastique à un portique 35 solidaire de la structure 27 déployée. Le moyen de suspension 33 est déplaçable le long du portique 35 grâce à un chariot 37. La structure 27 est en outre reliée à un dispositif d'évacuation 39 comportant une soufflante. La structure 27, ainsi que décrit dans la demande susmentionnée EP-A-631 096, est destinée à former un réceptacle de confinement du gaz CO₂ formé lors du chargement du bac en neige carbonique.

Une conduite 41 de fourniture de CO₂ liquide, munie d'un vannage adéquat, part du réservoir 7. Elle est prolongée par un flexible 43 relié à l'injecteur 31.

L'injecteur 31, en forme de pistolet, est un injecteur de neige carbonique. Sa tête présente des moyens de détente du CO₂ liquide et de formation de neige carbonique, à savoir un orifice calibré (non visible sur les dessins) et une buse de sortie 45 de forme cylindrique à axe horizontal. L'injecteur 31 comprend en outre une électrovanne de distribution non représentée qui permet de doser la quantité de CO₂ liquide détendue et donc de neige carbonique formée. L'électrovanne est reliée par un câblage adéquat 47 à des moyens 49 de commande.

Une douille aimantée 51 est fixée sur la surface extérieure de la buse 45, parallèlement à son axe principal. Elle assure la solidarisation temporaire de l'injecteur 31 et du bac 11 en coopérant avec la plaque magnétique 23.

Pour assurer le chargement en neige carbonique du bac, on amène la façade avant de l'enceinte 1, rendue préalablement accessible, à proximité de la structure 27.

Le chariot 37 et les moyens 33 permettent d'amener l'injecteur 31 au droit de l'orifice 21 et d'insérer la buse 45 dans le bac à travers cet orifice. La plaque magnétique 23 et la douille aimantée 51 sont positionnées de manière à venir alors en contact et, ainsi, assurer la solidarisation temporaire de l'injecteur 31 et du bac 11.

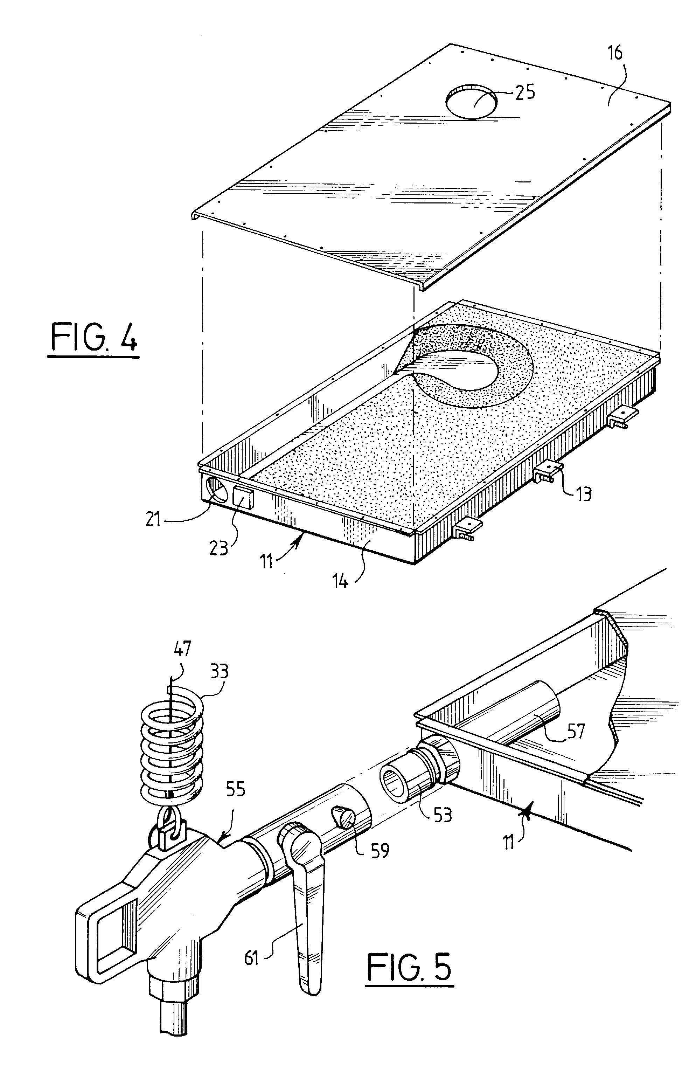

Le début et la durée du chargement sont commandés via l'électrovanne par les moyens 49 de commande. Le chargement du bac est illustré par les figures 3 et 4.

Quand l'électrovanne est ouverte, le CO₂ liquide est détendu dans la buse 45, ce qui produit un jet de neige carbonique sensiblement tangent à la face latérale gauche du bac 11. Le jet de neige carbonique vient impacter la face arrière du bac, puis est dévié le long de celle-ci jusqu'à impacter la face latérale droite du bac 11. Le jet est alors dévié le long de cette face latérale droite. Il vient ensuite impacter la face avant du bac 11 à son extrémité droite, avant d'être à nouveau dévié vers l'extrémité gauche de cette face avant, où il rencontre le jet émergent de la buse 45.

L'injection de neige carbonique crée ainsi un tourbillon de neige carbonique au sein du bac 11.

Dans ce mouvement centrifuge, le CO₂ gazeux formé est concentré dans la partie centrale du tourbillon et s'élève à partir de celle-ci. L'orifice 25 d'évacuation a été placé dans la région des centres des tourbillons pour la gamme de pressions d'injection choisie. Les flèches de la figure 4 matérialisent le trajet d'évacuation hors du bac du CO₂ gazeux. Cette configuration permet de s'affranchir de la présence d'une grille de retenue de la neige carbonique, puisque la ségrégation des gaz et des particules de neige s'effectue naturellement au sein du tourbillon.

Le bac selon l'invention permet donc d'obtenir un remplissage satisfaisant du bac en neige carbonique, ainsi que le montre la figure 4.

Bien entendu, la douille 51 et la plaque 23 sont adaptées pour que, d'une part, le recul de l'injecteur 31 lors du chargement du bac ne provoque pas la désolidarisation du bac 11 et de l'injecteur 31, et d'autre part, pour qu'un opérateur soit capable de désolidariser le bac 11 et l'injecteur 31 manuellement.

La figure 5 illustre un autre mode de réalisation de l'invention, qui diffère du précédent par les points suivants.

Le bac comprend un moyen 53 de raccordement à un injecteur 55 de CO₂ liquide, du type "raccord rapide", et des moyens d'injection de neige carbonique dans le bac comprenant des moyens de détente de CO₂ liquide et de formation de neige carbonique. Ces moyens comprennent un orifice calibré de détente du CO₂ (non visible sur le dessin), et une buse cylindrique 57 d'injection dans la cuvette 14 de la neige carbonique formée. L'orifice calibré et la buse 57 sont donc solidaires du bac 11. La buse 57 est identique à la buse 45 des figures 1 à 3 et orientée de la même manière.

L'injecteur 55 comprend un dispositif de verrouillage/déverrouillage manuel qui permet de le solidariser temporairement aux moyens de raccordement 53. L'injecteur 55 comporte un robinet manuel 61 d'ouverture/fermeture placé en aval de l'électrovanne de l'injecteur. Ce robinet 61 est couplé mécaniquement au dispositif 59 de façon à ne permettre l'ouverture du robinet que lorsque l'injecteur 55 et le bac sont correctement solidarisés, comme décrit dans la demande susmentionnée EP-A-631 096. Les autres éléments du bac 11 de l'injecteur 55 sont en tout point identiques à ceux du mode de réalisation précédent.

Le bac 11 et l'injecteur 55 de la figure 5 peuvent également être incorporés dans une enceinte et une installation telles que décrites précédemment. Pour charger le bac 11, on solidarise l'injecteur 55 au bac grâce au dispositif 59, et l'ouverture de l'électrovanne du pistolet est commandée par les moyens 49 de commande. Le mode de remplissage est ensuite identique à celui décrit précédemment, créant lui aussi un tourbillon, et présentant donc les mêmes avantages.

L'invention permet d'assurer une injection de neige carbonique rapide, efficace, modulable, avec une mise en oeuvre facile et de faibles pertes en CO₂. De plus, le bac est de coût réduit puisqu'il ne présente pas de rampe d'injection ni de grille d'évacuation. Il peut de plus être chargé par des injecteurs de CO₂ liquide ou de neige carbonique courants.

## Revendications

1. Bac (11) de réception de neige carbonique, du type comprenant, d'une part, des moyens (21 ; 53, 57) d'injection adaptés pour coopérer avec un injecteur (31) relié à une source (5) de CO₂ liquide et permettre l'injection de neige carbonique dans le bac (11), et, d'autre part, dans la face supérieure du bac (11), des moyens (25) d'évacuation du CO₂ gazeux formé lors de ladite injection, caractérisé en ce que les moyens (21 ; 53, 57) d'injection sont adaptés pour orienter l'injection de neige carbonique à peu près tangentiellement à une paroi latérale du bac (11) de manière à créer un tourbillon dans le bac, et en ce que les moyens (21 ; 53, 57) d'évacuation du CO₂ gazeux produit lors de l'injection de neige carbonique sont localisés dans la région centrale dudit tourbillon.

2. Bac selon la revendication 1, caractérisé en ce que les moyens (21) d'injection comprennent un orifice (21) de réception d'une buse (45) de détente de CO₂ liquide et de formation de neige carbonique solidaire de la tête de l'injecteur (31).

3. Bac selon la revendication 1, caractérisé en ce que les moyens (53, 57) d'injection comprennent des moyens (53) de raccordement à l'injecteur (31), reliés à une buse (57) de détente de CO₂ liquide et de formation de neige carbonique, cette buse étant solidaire du bac (11).

4. Bac selon l'une quelconque des revendications 1 à 3, caractérisé en ce qu'il comporte des moyens (23, 51 ; 59) de solidarisation temporaire prévus pour positionner l'injecteur (31) sur le bac (11).

5. Bac selon la revendication 4, caractérisé en ce que les moyens (59) de solidarisation temporaire comprennent un dispositif (59) de verrouillage/déverrouillage manuel.

6. Bac selon les revendications 3 et 5 prises ensemble, caractérisé en ce que les moyens (23, 51) de solidarisation comprennent un système (23, 51) à aimant.

7. Bac selon l'une quelconque des revendications 1 à 6, caractérisé en ce que les moyens (25) d'évacuation sont constitués par un orifice (25), notamment circulaire.

8. Bac selon l'une quelconque des revendications 1 à 7, caractérisé en ce que le bac (11) est parallélépipédique et en ce que les moyens (21 ; 53, 57) d'injection sont adjacents et parallèles à une des grandes faces latérales du bac (11).

9. Enceinte (3) de conservation à basse température de produits, du type comportant un volume de stockage thermiquement isolé et au moins un bac (11) de neige carbonique adapté pour réfrigérer ce volume, caractérisée en ce que le bac (11) est un bac selon l'une quelconque des revendications 1 à 8.

10. Installation de conservation à basse température de produits du type comprenant, une enceinte (3) de conservation à basse température de produits comportant un volume de stockage thermiquement isolé et au moins un bac (11) de réception de neige carbonique adapté pour réfrigérer ce volume, une source (5) de CO₂ liquide sous pression, et un injecteur (31) relié à cette source, adapté pour être relié au bac et muni d'une vanne de distribution reliée à des moyens (49) de commande, caractérisée en ce que l'enceinte (3) est conforme à la revendication 9.
